# EUROPÄISCHE PATENTSCHRIFT

(11) **EP 1 776 008 B1**
(45) Veröffentlichungstag und Bekanntmachung des Hinweises auf die Patenterteilung: **22.06.2011**
(21) Anmeldenummer: 05767901.1
(22) Anmeldetag: 01.07.2005
(51) Int. Cl.: A01B 59/00

(54) **GRIFF, HUBSPINDELANORDNUNG UND FERTIGUNGSVERFAHREN FÜR EINEN GRIFF**
HANDLE, LIFTING SPINDLE ARRANGEMENT, AND METHOD FOR THE PRODUCTION OF A HANDLE
POIGNEE, ENSEMBLE VIS DE MONTEE ET PROCEDE POUR FABRIQUER UNE POIGNEE

(30) Priorität: 03.07.2004 DE 102004032312
(43) Veröffentlichungstag der Anmeldung: 25.04.2007
(73) Patentinhaber: Deere & Company, Moline, IL 61265-8098 (US)
(72) Erfinder: VERGARA, Daniel, 28820 Madrid (ES)
(74) Vertreter: Holst, Sönke
(86) Internationale Anmeldenummer: PCT/EP2005/053125
(87) Internationale Veröffentlichungsnummer: WO 2006/003180

(56) Entgegenhaltungen:
- EP-A- 0 428 856
- EP-A- 1 308 075
- US-A- 4 194 757
- US-A- 6 056 069

## Beschreibung

Die Erfindung betrifft einen Griff mit parallel zu einer Achse ausgebildeten Ausbuchtungen, welche um die Achse wenigstens teilweise einen Hohlraum bilden. Des Weiteren wird eine Hubspindelanordnung mit einem erfindungsgemäßen Griff vorgeschlagen, sowie ein Fertigungsverfahren für einen solchen.

Im Stand der Technik sind Hubspindeln bekannt, die insbesondere bei Dreipunktanhängevorrichtungen für landwirtschaftliche Geräte zum Einsatz kommen. Durch Verdrehen einer Gewindestange (Spindel), die in Eingriff mit einer oder zwei Verstellmuttern bzw. Verstellhülsen steht, kann die Länge der Hubspindel variiert und den Anforderungen entsprechend angepasst werden. Um ein entsprechendes Drehmoment auf die Gewindestange übertragen zu können, sind derartige Hubspindeln mit einem um die Achse der Gewindestange verdrehbaren Griff versehen, der mit einem an der Gewindestange fixierten Spannstift in Eingriff treten kann. Durch Verdrehen des Griffs wird eine verbesserte Hebelwirkung erzielt, die das Verdrehen der Gewindestange vereinfachen soll.

Derartige Griffe werden an den Anhängevorrichtungen landwirtschaftlicher Schlepper der Marke John Deere eingesetzt und sind beispielsweise in den Ersatzteilkatalogen für die Schlepper der 6020er Serie offenbart (Katalog 4348, Raster 614, Gruppe 71, Seite 42, Teilenummer: AL77854). Der Griff wird aus zwei flächig aneinandergeschweißten Blechen gefertigt, die entlang einer Achse eine ausgeformte Ausbuchtung aufweisen, in dem die Gewindestange einer Hubspindelanordnung aufgenommen wird. Das Fertigen des Griffs erweist sich als materialintensiv und aufwendig.

Ein Griff gemäβ dem Oberbegriff von Anspruch 1 ist aus EP 1308075 bekannt.

Das der Erfindung zugrunde liegende Problem wird darin gesehen, einen Griff der eingangs genannten Art anzugeben, der mit weniger Material und Aufwand fertigbar ist.

Die Aufgabe wird erfindungsgemäß durch die Lehre des Patentanspruchs 1, 8 bzw. 11 gelöst. Vorteilhafte Ausgestaltungen und Weiterbildungen der Erfindung gehen aus den Unteransprüchen hervor.

Erfindungsgemäß wird ein Griff der eingangs genannten Art mit Ausbuchtungen versehen, die entlang der Achse hintereinander angeordnet sind, wobei wenigstens eine Ausbuchtung zu einer benachbarten Ausbuchtung radial zur Achse entgegengesetzt ausgeformt ist. Dadurch, dass die Ausbuchtungen radial entgegengesetzt ausgeformt sind, besteht die Möglichkeit den Griff in einem einzigen Fertigungsschritt durch einen Umformvorgang, beispielsweise in einer Tiefzieh- oder Streckziehpresse oder auch in einem Schmiedegesenk auszubilden. Vorzugsweise sind drei hintereinander angeordnete Ausbuchtungen vorgesehen, von denen die mittlere in eine radial zur Achse entgegensetzte Richtung zu den anderen beiden Ausbuchtungen ausgeformt ist. Die entgegengesetzt ausgeformten Ausbuchtungen bilden jeweils teilweise einen Hohlraum um die Achse mit einem vorgebbaren Radius, so dass die Achse jeweils auf entgegengesetzten Seiten abwechselnd teilweise umschlossen wird. Dadurch entsteht ein Aufnahmebereich, beispielsweise zur Aufnahme eines stangenförmigen oder rohrförmigen Körpers, an dem der Griff radial fixiert und gegebenenfalls drehbar und axial verschiebbar gelagert ist. Vorzugsweise ist der Griff einteilig aus einem Flachstahl gefertigt. Beispielsweise kann dazu ein Stahlblech eingesetzt werden, welches eine entsprechende Dicke und Festigkeit aufweist, um das erforderliche Drehmoment auf den Drehkörper zu übertragen. Durch eine geeignete Umformvorrichtung, wie z. B. eine Tiefzieh- oder Streckziehpresse oder ein Schmiedegesenk, kann das Blech in einem Arbeitsgang zu einem Griff mit einem entsprechenden Aufnahmebereich umgeformt werden. Dadurch, dass der Griff einteilig fertigbar ist, entfallen zusätzliche Maßnahmen, wie z. B. Verschweißen oder Vernieten, wie es der Stand der Technik offenbart. Gleichzeitig wird dadurch der Materialaufwand auf ein Teil reduziert.

Im Bereich wenigstens einer Ausbuchtung ist eine Aussparung vorgesehen, die zu einem Rand der Ausbuchtung geöffnet ist. Die Aussparung eignet sich dazu, mit einem Vorsprung, welcher an einem von dem Griff aufgenommenen Drehkörper fixiert ist, in eine Eingriffsstellung oder Einrastposition zu treten. Durch Verdrehen des Griffs um seine Achse kann so eine Hebelwirkung und damit ein Drehmoment auf den Drehkörper übertragen werden.

Die Ausbuchtungen am Griff können ein- oder mehrstufig ausgebildet sein, so dass die Ausbuchtungen beispielsweise mit einer ersten und einer sich an die erste Erhebung anschließenden zweiten Erhebung entlang der Achse ausgebildet sind. Die zweite Erhebung dient als Führungsfläche des Griffs auf einem Drehkörper, wobei die erste Erhebung einen Hohlraum zwischen Griff und Drehkörper bildet. Der Hohlraum weist vorzugsweise eine Querschnittsform auf, die im Wesentlichen der Querschnittsform eines an dem Drehkörper befindlichen Vorsprungs entspricht. Durch den Hohlraum wird ermöglicht, bei entsprechender radialer Ausrichtung des Griffs, eine axiale Verschiebung des Griffs über den am Drehkörper befindlichen Vorsprung hinweg durchzuführen.

Denkbar ist es auch, dass der Griff aus mehreren ineinanderfügbaren Flachstählen gefertigt ist. Vorzugsweise sind dann an einem ersten Flachstahl die Ausbuchtungen einseitig ausgebildet, wobei zwischen zwei Ausbuchtungen eine Aussparung vorgesehen ist. Ein zweiter Flachstahl weist eine entsprechend entgegengesetzt ausgebildete Ausbuchtung auf, die in die Aussparung einsetzbar ist. Der zweite Flachstahl weist dabei an Randbereichen der Aussparung eine Überlappung mit dem ersten Flachstahl auf. Durch Einfügen der entgegengesetzt ausgebildeten Ausbuchtung in die Aussparung, kommt die Überlappung zum Tragen, so dass durch Aufnehmen eines Drehkörpers in die Ausbuchtungen die beiden Flachstähle zueinander fixiert und drehbar und axial verschiebbar auf dem Drehkörper gelagert sind. Ein Verschweißen oder Vernieten der beiden Flachteile erübrigt sich. Auf gleiche Art und Weise können auch mehrere Aussparungen vorgenommen werden, die zwischen mehr als zwei Ausbuchtungen angeordnet sind und in welche entsprechend mehrere entgegengesetzt ausgerichtete Aussparungen eingesetzt werden.

Denkbar ist es auch, den Griff als einteiliges Gussteil auszubilden. Durch die erfindungsgemäße Anordnung der Ausbuchtungen ist es möglich den Gießvorgang ohne die Verwendung von Kernen durchzuführen, wodurch der Gießprozess als solcher besonders einfach ausgeführt werden kann.

Zur besseren Bedienbarkeit können die sich parallel zur Achse erstreckenden Kanten des Griffs gebördelt ausgebildet sein. Einerseits werden dadurch scharfe Kanten vermieden, andererseits wird dadurch die Griffigkeit des Griffs erhöht und einem Abrutschen der Bedienhand bei der Aufbringung einer Hebelkraft vorgebeugt.

In einer weiteren Ausgestaltung der Erfindung ist es möglich, die Ausbuchtungen über einen Achsumfang von geringfügig mehr als 180° (beispielsweise 185°) auszubilden. Dies hätte den Vorteil, dass schon mit zwei aufeinanderfolgenden Ausbuchtungen eine ausreichende Fixierung des Griffs an einem Drehkörper möglich wäre, da durch Umschließung des Drehkörpers um mehr als 180° eine Klemmenwirkung erzielt würde. Eine um mehr als 180° ausgebildete Ausbuchtung ermöglicht es sogar, auf eine zweite entgegengesetzt ausgebildete Ausbuchtung zu verzichten, wenn durch die eine Ausbuchtung bereits eine ausreichende Klemmenwirkung erzielt würde. Eine derartige Ausbildung eines Griffs stellt eine alleinige Erfindung dar.

Ein erfindungsgemäßer Griff wird vorzugsweise an einer Hubspindelanordnung eingesetzt. Die Hubspindelanordnung weist üblicherweise einen Drehkörper auf, welcher beispielsweise eine Gewindestange oder Spindel sein kann. Durch Verdrehen der Gewindestange gegenüber einer oder mehrerer Muttern bzw. Gewindehülsen kann die Hubspindel in Ihrer Länge verändert werden. Dabei kann die Gewindestange an einem Endbereich mit einem Rechtsgewinde und am anderen Endbereich mit einem Linksgewinde ausgestattet sein und dadurch gleichzeitig mit zwei Muttern in Eingriff stehen. Die Hubspindel kann jedoch auch mit einer Verstellhülse als Drehkörper ausgebildet sein, wobei die Verstellhülse einseitig oder beidseitig mit einer feststehenden Gewindestange oder Spindel in Eingriff steht. Entsprechend der Ausbildung der Hubspindelanordnung wird der Griff beim Zusammenbau der Hubspindel über den Drehkörper geführt, wobei der Griff axial verschiebbar und verdrehbar durch die Ausbuchtungen auf dem Drehkörper gelagert wird. Ein erfindungsgemäßer Griff kann auch in einer Hubspindelanordnung mit einem mehreckig oder oval ausgebildeten Drehkörper Anwendung finden. Der Griff wird dann mit entsprechend mehreckig bzw. oval ausgebildeten Ausbuchtungen versehen. Gegebenenfalls kann der Griff axial verschiebbar auf dem Drehkörper gelagert werden.

Der Drehkörper ist vorzugsweise mit einem radial herausragenden Vorsprung versehen. Entsprechend der Ausbildung des Vorsprungs erfolgt die Ausbildung der am Griff angeordneten Aussparung vorzugsweise derart, dass der Griff durch radiale Ausrichtung der Aussparung zum Vorsprung und axiale Verschiebung mit dem Vorsprung in Eingriff bringbar ist. Dadurch, dass die Aussparung am Griff mit dem Vorsprung in Eingriff tritt, kann ein Drehmoment vom Griff auf den Drehkörper übertragen werden. Bei einer runden Ausbildung der Ausbuchtungen erfolgt eine Drehmomentübertragung vorzugsweise mittels Aussparung und Vorsprung. Hierbei findet vorzugsweise eine mehrstufige Ausbildung der Ausbuchtungen Anwendung, so dass der Griff bei radialer Ausrichtung der ersten Erhebung zum Vorsprung axial verschiebbar ist. Bei einer mehreckigen bzw. ovalen Ausbildung der Ausbuchtungen erfolgt die Drehmomentübertragung durch die mehreckige bzw. ovale Formgebung der Ausbuchtung, so dass eine Anordnung der Aussparung und des Vorsprungs entfallen kann.

Vorzugsweise wird der Vorsprung von einem sich durch eine Bohrung quer durch den Drehkörper erstreckenden zylindrischen Bolzen, Spannstift, Splint oder dergleichen gebildet, wobei der Vorsprung sich ein- oder beidseitig des Drehkörpers radial erstrecken kann. Es ist auch denkbar, den Vorsprung auf eine andere Art herzustellen, beispielsweise durch eine am Drehkörper befestigte Schelle oder durch eine in den Drehkörper eingebrachte Passfeder.

Ein erfindungsgemäßer Griff wird vorzugsweise durch Umformen eines Flachstahls gefertigt. Dazu eignet sich eine Umformvorrichtung, wie z. B. eine Presse oder ein Schmiedegesenk. Beispielsweise kann eine Tiefziehpresse oder eine Streckziehpresse, die einen ersten und einen zweiten Pressformkörper aufweist eingesetzt werden. Dadurch, dass die Ausbuchtungen entlang der Achse versetzt angeordnet werden, können diese in einem einzigen Umformschritt durch Aneinanderpressen der Pressformkörper ausgeformt werden. Auf diese Weise können die Ausbuchtungen sowohl ein- als auch mehrstufig ausgebildet werden.

Anhand der Zeichnung, die mehrere Ausführungsbeispiele der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine perspektivische Ansicht einer Seitenfläche eines erfindungsgemäßen Griffs,
- Fig. 2: eine perspektivische Ansicht der gegenüberliegenden Seitenfläche des Griffs aus Figur 1,
- Fig. 3: eine Seitenansicht des Griffs aus den Figuren 1 und 2 in einem an einen Drehkörper montierten Zustand,
- Fig. 4: eine perspektivische Ansicht einer Hubspindelanordnung mit einem erfindungsgemäßen Griff,
- Fig. 5: eine perspektivische Ansicht einer Hubspindelanordnung in einer weiteren Ausführungsform mit einem erfindungsgemäßen Griff,
- Fig. 6: eine perspektivische Ansicht einer Seitenfläche eines erfindungsgemäßen Griffs in einer weiteren Ausführungsform,
- Fig. 7: eine Seitenansicht des Griffs aus Figur 6,
- Fig. 8: eine perspektivische Ansicht einer Hubspindelanordnung in einer weiteren Ausführungsform mit einem erfindungsgemäßen Griff,
- Fig. 9: eine perspektivische Ansicht eines Drehkörpers in Verbindung mit einer weiteren Ausführungsform eines erfindungsgemäßen Griffs und
- Fig. 10: eine perspektivische Ansicht eines Drehkörpers in Verbindung mit einem Klemmgriff.

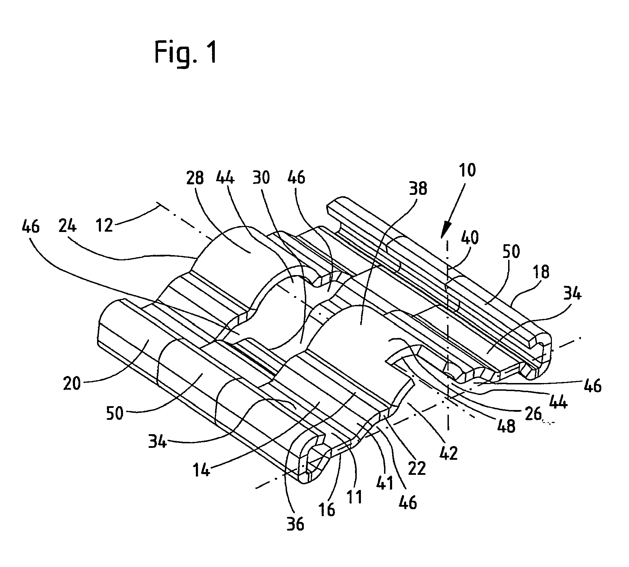

In Figur 1 ist ein Griff 10 dargestellt, der aus einem viereckförmigen Flachstahl 11, beispielsweise einem Blechprofil, gefertigt ist. Der Griff 10 weist eine Achse 12, erste und zweite Seitenflächen 14, 16, erste und zweite Seitenkantenbereiche 18, 20 und erste und zweite Endkantenbereiche 22, 24 auf.

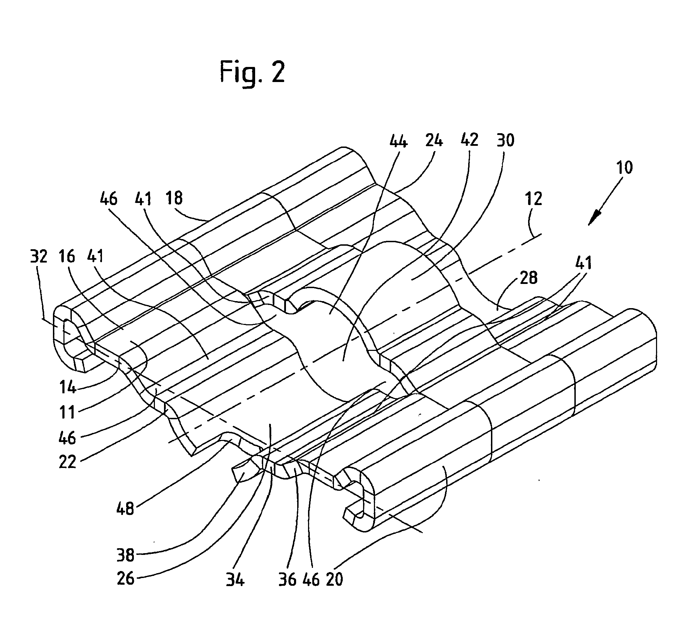

Auf der ersten Seitenfläche 14 ist eine erste und eine zweite Ausbuchtung 26, 28 ausgebildet. Auf der zweiten Seitenfläche 16 ist eine dritte Ausbuchtung 30 ausgebildet (siehe insbesondere Figur 2), wobei die dritte Ausbuchtung 30 in diesem Ausführungsbeispiel zwischen der ersten und der zweiten Ausbuchtung 26, 28 angeordnet ist und sich in entgegengesetzter Richtung zu der ersten und der zweiten Ausbuchtung 26, 28 erstreckt.

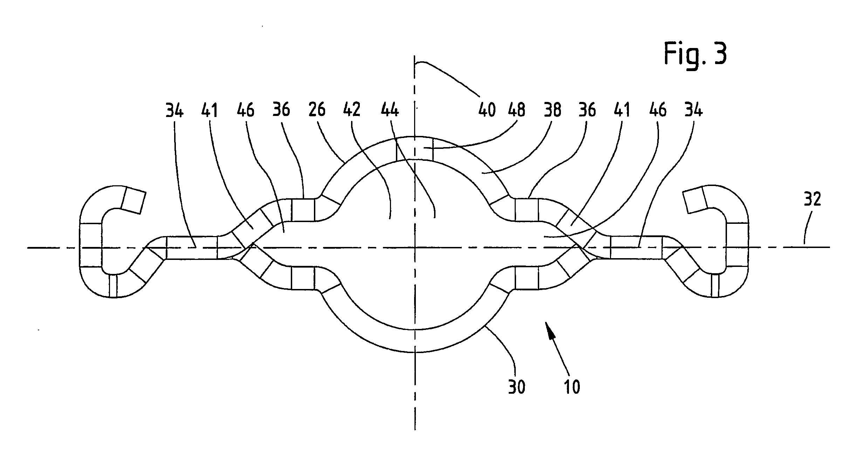

Die Ausbuchtungen 26, 28, 30 sind symmetrisch zur Achse 12 ausgebildet und weisen, wenn auch in verschiedene Richtungen ausgebildet, im Wesentlichen die gleiche Form auf, wie insbesondere auch in den Figuren 2 und 3 zu erkennen ist. Die Beschreibung der Ausbuchtungen 26, 28, 30 erfolgt im Folgenden anhand der ersten Ausbuchtung 26. Ausgehend von einer sich entlang einer Bezugsachse 32 erstreckenden Flachstahlebene 34 (siehe auch Figur 1), weist die Ausbuchtung 26 eine erste und eine zweite Erhebung 36, 38 auf, die sich beide symmetrisch zu einer senkrecht zur Achse 12 und zur Bezugsachse 32 ausgerichteten Symmetrieachse 40 erstrecken. Die erste Erhebung stellt im Wesentlichen eine erhobene Ebene dar, die der Flachstahlebene 34 übergelagert ist. Die zweite Erhebung 38 ist im Wesentlichen kreisbogenförmig ausgebildet und erstreckt sich aus der ersten Erhebung 36 heraus, so dass beidseitig der zweiten Erhebung 38 zwischen der ersten Erhebung 36 und der Flachstahlebene 34 entlang der Achse 12 eine Abstufung 41 ausgebildet ist. Durch die Ausbuchtung 26 wird im Bereich um die Achse 12 zwischen den Erhebungen 36, 38 und der (imaginären) Flachstahlebene 34 ein sich zu einer Seite der Flachstahlebene 34 erstreckender Hohlraum 42 geschaffen. Der Hohlraum 42 setzt sich aus einem im Wesentlichen durch die zweite Erhebung 38 geprägten, mittig zur Achse 12 angeordneten Hohlraum 44 mit halbkreisförmigem Querschnitt und aus sich radial daran anschließenden und im Wesentlichen durch die erste Erhebung 36 bzw. durch die Abstufung 41 geprägten Hohlräumen 46 zusammen, so dass insgesamt ein Hohlraum 42 mit glockenförmigem Querschnitt geschaffen wird, wie insbesondere in Figur 3 zu erkennen ist.

Der Griff 10 ist mit einer in diesem Fall rechteckförmigen Aussparung 48 versehen. Die Aussparung 48 ist am Endkantenbereich 22 des Griffs 10 vorgesehen und erstreckt sich axial und in Umfangsrichtung zur Achse 12.

Die Seitenkantenbereiche 18, 20 sind mit einer Bördelung 50 parallel zur Achse 12 versehen. Die Bördelung 50 bietet den Vorteil, dass der Griff 10 durch einen Bediener besser gegriffen werden kann und bei einer Kraftanwendung auf den Griff 10 einer Fehlbedienung, beispielsweise einem Abrutschen der Hände, vorgebeugt wird.

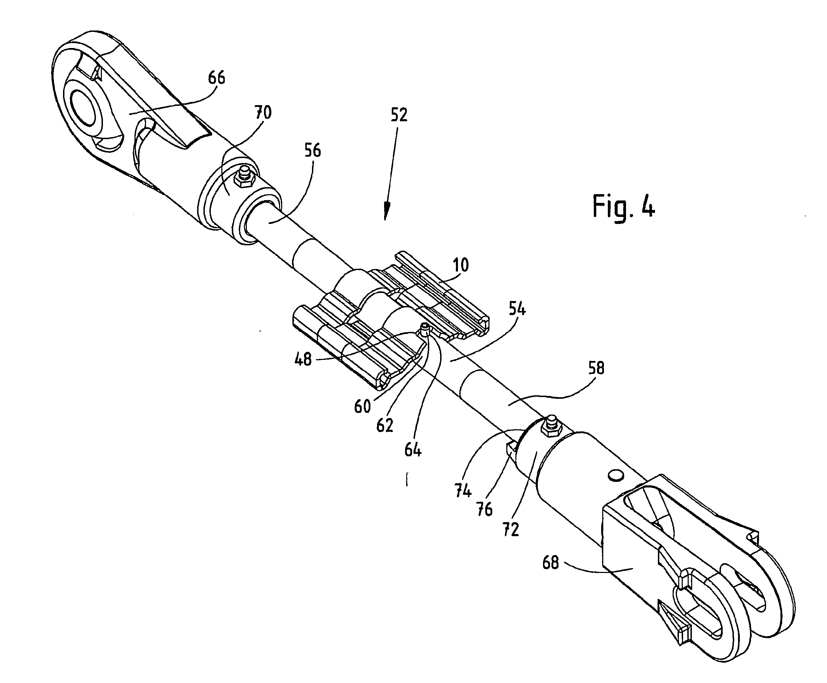

Anhand der Figur 4 erfolgt am Beispiel einer Hubspindel 52 für eine Dreipunktgerätevorrichtung eines landwirtschaftlichen Schleppers (nicht gezeigt) eine Funktionsbeschreibung des Griffs 10. Die Hubspindel 52 weist einen stangenförmigen Drehkörper 54 auf, der einen ersten und einen zweiten Gewindebereich 56, 58 mit entgegengesetzt geschnittenen Gewinden umfasst. Der Drehkörper 54 weist ferner einen Aufnahmebereich 60 auf, in dem der Griff 10 positionierbar ist. Der Aufnahmebereich 60 ist mit einem durch einen Spannstift ausgebildeten Vorsprung 62 versehen. Der Spannstift wird in einer Bohrung 64, die sich quer durch den Drehkörper 54 erstreckt, aufgenommen und am Drehkörper 54 fixiert. Die Hubspindel 52 ist mit einem Gelenkkopf 66 und einen Gabelkopf 68 versehen, wobei der Gelenkkopf 66 und der Gabelkopf 68 einen Innengewindebereich 70, 72 aufweist, in dem die Gewindebereiche 56, 58 des Drehkörpers 54 aufgenommen sind.

Der Gabelkopf 68 weist an seinem zum Gewindebereich 58 ausgerichteten Endbereich 74 sich axial zur Achse 12 erstreckende Vorsprünge 76 auf.

Da es insbesondere unter Last schwierig ist, den Drehkörper 54 mit bloßen Händen zu verdrehen, ist der Drehkörper 54 mit einem Griff 10 versehen, mit dem eine Hebelwirkung auf den Drehkörper 54 ausgeübt werden kann, so dass ein Verdrehmoment auf den Drehkörper 54, durch Verdrehen des Griffs 10 um die Achse 12, übertragen wird. Der Griff 10 wird dazu beim Zusammenbau der Hubspindel 52 derart über den Drehkörper 54 geschoben, dass die Hohlräume 42, bzw. 44 durch den Drehkörper ausgefüllt werden. Dadurch, dass sich die Ausbuchtungen 26, 28, 30 beidseitig entlang der Achse 12 erstrecken, wird der Griff 10 auf dem Drehkörper 54 drehbar und axial verschiebbar gelagert und radial zur Achse 12 fixiert.

Die Aussparung 48 am Griff 10 ist derart ausgebildet, dass sie in etwa dem Querschnitt des Vorsprungs 62 entspricht und diesen aufnehmen kann. Durch Verdrehen des Griffs 10 um die Achse 12 wird der Griff 10 mit der Aussparung 48 zu dem am Drehkörper 54 ausgebildeten Vorsprung 62 ausgerichtet und durch axiale Verschiebung mit dem Vorsprung 62 drehfest in Eingriff gebracht. Das vom Bediener durch Drehen des Griffs 10 einleitbare Drehmoment wird über die Aussparung 48 und dem Vorsprung 62 auf den Drehkörper 54 übertragen.

Die durch die Abstufung 41 geprägten Hohlräume 46 sind derart ausgebildet, dass sie den am Drehkörper 54 fixierten Vorsprung 62 aufnehmen können und bilden gegenüberliegende Durchlassbereiche für den am Drehkörper 54 fixierten Vorsprung 62. Der Vorsprung 62 kann beispielsweise durch einen radial zum Drehkörper 54 verlaufenden Spannstift ausgebildet sein. Durch die den Durchlassbereich für den Vorsprung 62 bildenden Hohlräume 46 kann der Griff 10 entlang des Drehkörpers 54 axial verschoben werden, ohne dass der Vorsprung 62 mit dem Griff 10 kollidiert. Voraussetzung dafür ist, dass der Griff 10 bei einer axialen Verschiebung entsprechend ausgerichtet wird, so dass der Vorsprung 62 und einer der Durchlassbereiche fluchten.

Die auf dem Gabelkopf 68 ausgebildeten Vorsprünge 76 dienen zur Arretierung des Griffs 10 in einer Außerbetriebsstellung. Dazu wird der Griff 10 gegebenenfalls zunächst durch axiale Verschiebung von seiner Eingriffsposition mit dem Vorsprung 62 gelöst und durch Verdrehen derart ausgerichtet, dass die Durchlassbereiche zum Vorsprung 62 ausgerichtet sind. Der Griff 10 kann nun über den Vorsprung 62 hinweg axial verschoben werden. Durch Ausrichten der Aussparung 48 zu einem der Vorsprünge 76 und axiales Verschieben in Richtung des Gabelkopfes 68 kann der Griff 10 in seiner Außerbetriebsstellung mit dem Endbereich 74 des Gabelkopfs 68 zum Anschlag gebracht werden.

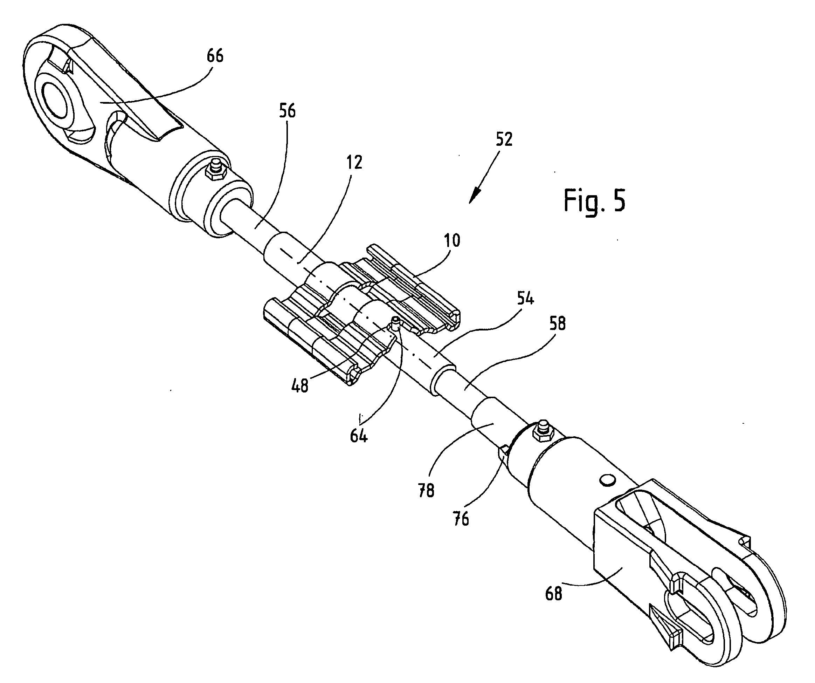

In Figur 5 ist eine weitere Ausführungsform einer Hubspindel 52 abgebildet. Die Hubspindel 52 weist voneinander getrennte Gewindebereiche 56, 58 auf, wobei der erste Gewindebereich 56 mit dem Gelenkkopf 66 und der zweite Gewindebereich 58 mit dem Gabelkopf 68 drehfest verbunden sind. Der Drehkörper 54 ist bei diesem Ausführungsbeispiel rohrförmig in Form einer mit Innengewinde versehenen Verstellhülse bzw. als Mutter ausgebildet, wobei die Innengewinde entsprechend den Gewindebereichen 56, 58 entgegengesetzt ausgebildet sind. Über den Drehkörper 54 sind die beiden Gewindebereiche 56, 58 miteinander verbunden. Des Weiteren verfügt der Drehkörper 54 auch hier über einen Vorsprung 62. Zum Verdrehen des rohrförmig ausgebildeten Drehkörpers 54 wird der Griff 10 auf den Drehkörper 54 geschoben und in der oben beschriebenen Weise bedient. Durch Verdrehen des Drehkörpers 54 kann die Länge der Hubspindel verändert werden.

Zur Arretierung des Griffs 10 in eine Außerbetriebsstellung sind auch hier am Gabelkopf 68 Vorsprünge 76 vorgesehen, wobei der Gabelkopf 68 des Weiteren mit einem abgesetzten Bereich 78 versehen ist, der zur Lagerung des Griffs 10 in seiner Außerbetriebsstellung dient. Der abgesetzte Bereich 78 weist im Wesentlichen einen Durchmesser auf, der dem Durchmesser des Drehkörpers 54 entspricht und erstreckt sich über ein Länge, die im Wesentlichen die erste und dritte Ausbuchtung 26, 30 abdeckt, so dass der Griff 10 in seiner Außerbetriebsstellung im Wesentlichen spielfrei arretierbar ist. Die am Gabelkopf 68 ausgebildeten Vorsprünge 76 können auch am Gelenkkopf 66 ausgebildet sein. In diesem Fall würde der Griff 10 mit seiner Aussparung 48 in Richtung des Gelenkkopfes 66 angeordnet werden.

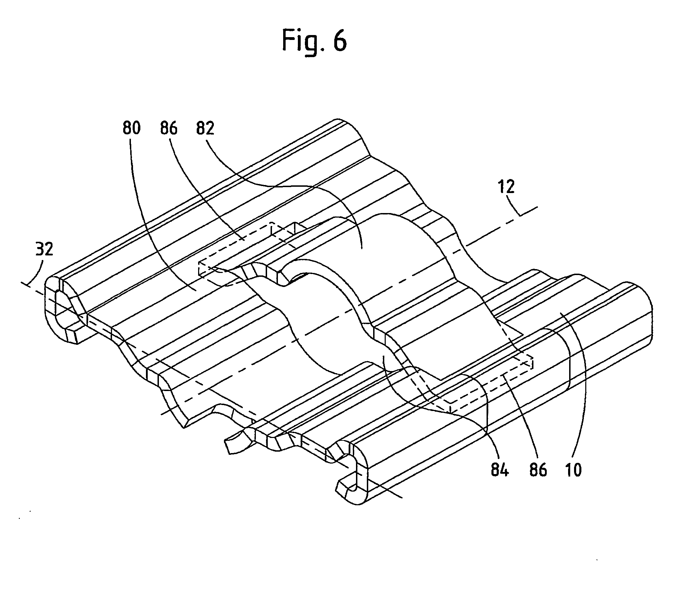

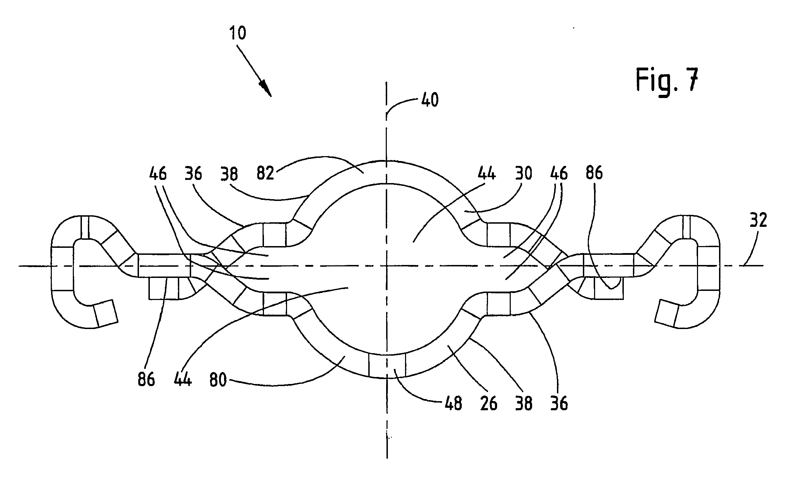

In den Figuren 6 und 7 ist eine weitere Ausführungsform eines erfindungsgemäßen Griffs 10 dargestellt. Hierbei ist der Griff 10 durch einen ersten und einen zweiten Flachstahl 80, 82 ausgebildet. Der Flachstahl 80 weist im Wesentlichen die gleiche Form und Ausgestaltung auf wie der in den Figuren 1 und 2 dargestellte Flachstahl 11, nur dass der Flachstahl 80, im Bereich und anstelle der dritten Ausbuchtung 30 aus den Figuren 1 und 2, mit einer rechteckförmigen Aussparung 84 versehen ist. Der zweite Flachstahl 82 ist im Wesentlichen der aus den Figuren 1 und 2 ausgesparten Ausbuchtung 30 entsprechend ausgebildet. Die Aussparung 84 und der zweite Flachstahl 82 sind derart einander angepasst, dass es im Bereich der Flachstahlebene 34 beidseitig der Achse 12 zu einer Überlappung 86 kommt, so dass die beiden Flachstähle 80, 82 ineinander fügbar sind und somit eine Ausbildung ergeben, die im Wesentlichen mit der aus den Figuren 1 und 2 vergleichbar ist. Sobald der Griff 10 auf einem Drehkörper 54 geschoben wird, sind die beiden Flachstähle 80, 82 unlösbar miteinander verbunden und können in gleicher Weise, wie bereits zuvor beschrieben wurde, auf dem Drehkörper 54 verdrehbar, axial verschiebbar und arretierbar gelagert werden.

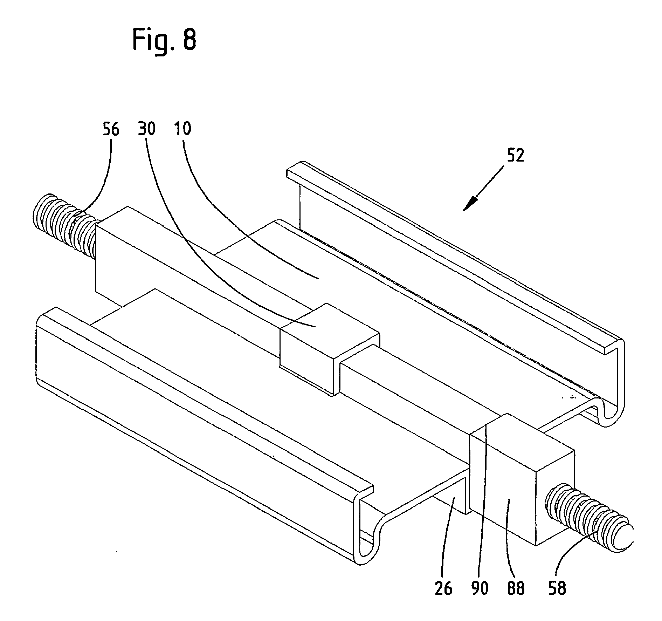

Auch wenn die Erfindung anhand mehrerer Ausführungsbeispiele beschrieben wurde, erschließen sich für den Fachmann im Lichte der vorstehenden Beschreibung sowie der Zeichnung weitere verschiedenartige Alternativen, Modifikationen und Varianten, die unter die vorliegende Erfindung fallen. So kann beispielsweise die Ausformung der Ausbuchtungen 26, 28, 30 auch mehreckig erfolgen, wie es in Figur 8 dargestellt ist, so dass der Griff 10 auf einem Drehkörper 88 lagerbar ist, der einen kongruenten mehreckigen Außenquerschnitt aufweist. Die mehreckige Formgebung der Ausbuchtungen 26, 28, 30 und der mehreckige Außenquerschnitt des Drehkörpers 88 sind derart aufeinander angepasst, dass eine drehfeste Verbindung bereits erfolgt, sobald der Griff 10 auf den Drehkörper 88 aufgeschoben wird. Der Drehkörper 88 ist im Bereich des mehreckigen Außenquerschnitts mit einem geringfügigen Absatz 90 versehen. Der Absatz 90 dient zur axialen Fixierung des Griffs 10. Bei dieser Variante erübrigt sich somit die Ausgestaltung einer Aussparung 48 am Griff 10 sowie die eines Vorsprungs 62 am Drehkörper 88 zur Übertragung eines Drehmoments auf den Drehkörper 54. Des Weiteren entfallen auch die seitlich der Achse 12 ausgebildeten Hohlräume 44, die einen Durchlassbereich für einen Vorsprung 62 bilden würden. Ferner entfallen auch die in Figur 4 dargestellten Vorsprünge 76 sowie der abgesetzte Bereich 78.

Des Weiteren ist es auch denkbar, auf einen Umformvorgang von Flachstählen 11, 80, 82 zu verzichten und den Griff 10 als Gussteil zu fertigen. Dies wäre von Vorteil, da durch die hintereinander angeordnete Ausformung der Ausbuchtungen 26, 28, 30 ein Gießvorgang ohne den Einsatz aufwändiger Gießformkerne durchführbar ist.

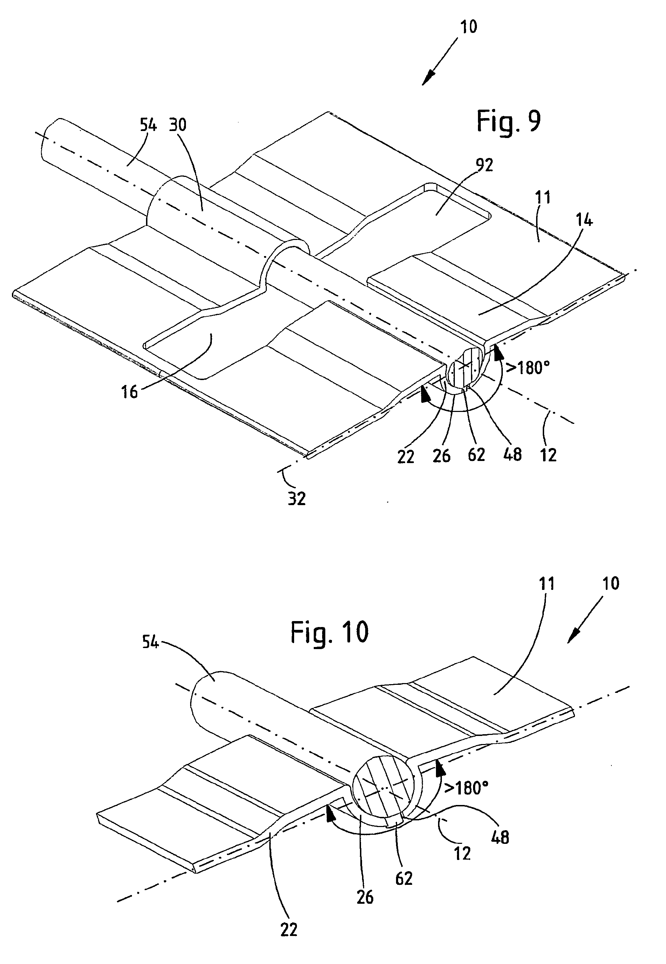

Weitere Varianten eines Griffes 10 sind in Figur 9 und 10 dargestellt. Figur 9 zeigt einen Griff 10, der nur zwei ausgeformte Ausbuchtungen 26, 30 aufweist, wobei die Ausbuchtungen 26, 30 jeweils um mehr als 180° die Achse 12 des Drehkörpers 54 umschließen und dadurch eine Art Klemmenfunktion darstellen. Der Drehkörper 54 weist auch hier einen Vorsprung 62 auf. Im Endkantenbereich 22 der Ausbuchtung 26 ist eine entsprechende Aussparung 48 zur Aufnahme des Vorsprungs 62 vorgesehen. Zwischen den Ausbuchtungen 26, 30 ist mittig zum Griff 10 eine rechteckförmige Aussparung 92 vorgesehen. Die Aussparung 92 erstreckt sich dabei in radialer Richtung zur Achse 12 bis in den Bereich der Flachstahlebene 34 hinein und weist in axialer Richtung zur Achse 12 eine Länge auf, die in etwa dem Durchmesser des Drehkörpers 54 entspricht. Die Aussparung 92 dient zum einen als Trennfuge zwischen den in unterschiedliche Richtungen ausgeformten Ausbuchtungen 26, 30 und als Durchlassbereich für den Vorsprung 62, wobei der Griff 10 durch Ausrichten des Vorsprungs 62 in einen Bereich außerhalb der Ausbuchtungen 26, 30 axial verschiebbar ist. Der Griff kann axial verschoben werden, indem der Vorsprung 62 zunächst auf einer Seitenfläche 14 gegenüber der einen Ausbuchtung 28 bis zur Aussparung 92 geführt wird, dann der Griff 10 um 180° gedreht und der Vorsprung 62 entlang der anderen Seitenfläche 16 gegenüber der Ausbuchtung 30 geführt wird. Zum anderen wird die Aussparung 92 benötigt, um den Griff an den Drehkörper 54 zu montieren. Der Griff 10 wird dabei mit der Aussparung 92 über den Drehkörper 54 geschoben und die Ausbuchtungen 26, 30 durch eine Kippbewegung des Griffs 10 auf den Drehkörper 54 geklemmt. Je nach Blechdicke des Flachstahls 11 bzw. je nach Umschließungswinkel der Ausbuchtungen 26, 30 wirkt sich diese Klemmenfunktion und damit der Halt des Griffs 10 am Drehkörper 54 mehr oder weniger stark auf den Drehkörper 54 aus. Eine entsprechend starke Ausführung der Klemmenfunktion kann auch ausreichenden Drehschluss bzw. eine drehfeste Verbindung zwischen Griff 10 und Drehkörper 54 herstellen, so dass auf die Aussparung 48 und den Vorsprung 62 verzichtet werden kann. Dies würde jedoch zu Lasten einer axialen Verschiebung gehen.

Ein weiteres Ausführungsbeispiel in Form eines Klemmgriffs ist in Figur 10 wiedergegeben. Hier wird lediglich eine Ausbuchtung 26 am Griff 10 ausgebildet, die ebenfalls durch einen entsprechend großen Umschließungswinkel (Umschließungswinkel > 180°) eine entsprechende Klemmenfunktion aufweist und beispielsweise mittels Montagewerkzeug oder durch entsprechend kräftiges Andrücken auf den Drehkörper 54 geklemmt wird. Der Anpressdruck der Ausbuchtung 26 sorgt hier für eine entsprechend drehfeste Verbindung zwischen Griff 10 und Drehkörper 54, wobei auch ein Vorsprung 62 mit einer Aussparung 48 in einer der vorhergehend beschriebenen Art und Weise angeordnet werden kann, um eine Drehmomentübertragung herzustellen.

## Patentansprüche

1. Griff mit parallel zu einer Achse (12) ausgebildeten Ausbuchtungen (26, 28, 30), welche um die Achse (12) wenigstens teilweise einen Hohlraum (42, 44, 46) bilden, **dadurch gekennzeichnet, dass** die Ausbuchtungen (26, 28, 30) entlang der Achse (12) hintereinander angeordnet sind, wobei wenigstens eine Ausbuchtung (26, 28, 30) zu einer benachbarten Ausbuchtung (26, 28, 30) radial zur Achse (12) entgegengesetzt ausgeformt ist.

2. Griff nach Anspruch 1, **dadurch gekennzeichnet, dass** wenigstens eine Ausbuchtung (26, 28, 30) mit einer Aussparung (48) versehen ist.

3. Griff nach einem oder mehreren der vorhergehenden Ansprüche, **dadurch gekennzeichnet, dass** die Ausbuchtungen (26, 28, 30) wenigstens zweistufig ausgebildet sind.

4. Griff nach einem oder mehreren der vorhergehenden Ansprüche, **dadurch gekennzeichnet, dass** er aus mehreren ineinander fügbaren Flachstählen (80, 82) gefertigt ist.

5. Griff nach einem oder mehreren der vorhergehenden Ansprüche, **dadurch gekennzeichnet, dass** er als Gussteil ausgebildet ist.

6. Griff nach einem oder mehreren der vorhergehenden Ansprüche, **dadurch gekennzeichnet, dass** er mit einer Bördelung (50) versehene Seitenkantenbereiche (18, 20) aufweist.

7. Griff nach einem oder mehreren der vorhergehenden Ansprüche, **dadurch gekennzeichnet, dass** die Ausbuchtungen (26, 28, 30) einen Hohlraum (42, 44, 46) um mehr als 180° umschließen.

8. Hubspindelanordnung mit einem Drehkörper (54), **dadurch gekennzeichnet, dass** ein Griff (10) gemäß einem oder mehreren der vorhergehenden Ansprüche auf dem Drehkörper (54) vorgesehen ist, wobei die Ausbuchtungen (26, 28, 30) des Griffs (10) verdrehbar und axial verschiebbar mit dem Drehkörper (54) in Eingriff bringbar sind.

9. Hubspindelanordnung nach Anspruch 8, **dadurch gekennzeichnet, dass** am Drehkörper (54) ein Vorsprung (62) vorgesehen ist und der Griff (10) durch radiale Ausrichtung der Aussparung (48) zum Vorsprung (62) und axiale Verschiebung entlang der Achse (12) mit dem Vorsprung (62) in Eingriff bringbar ist.

10. Hubspindelanordnung nach Anspruch 8 und/oder 9, **dadurch gekennzeichnet, dass** der Vorsprung (62) durch einen sich quer zur Achse (12) erstreckenden Spannstift ausgebildet ist.

11. Fertigungsverfahren für einen Griff (10) nach einem oder mehreren der Ansprüche 1 bis 3, **gekennzeichnet durch** Umformen eines Flachstahls (11, 80, 82), mit einer einen ersten und einen zweiten Umformkörper aufweisenden Umformvorrichtung, wobei der erste und der zweite Umformkörper Ausformungen aufweisen, welche sich in entgegengesetzte Richtungen erstrecken, wobei die Ausformungen im Wesentlichen den Ausbuchtungen (26, 28, 30) des Griffs (10) entsprechende Formen aufweisen und wobei die Ausbuchtungen (26, 28, 30) des Griffs (10) in dem Flachstahl (11, 80, 82) in einem einzigen Umformschritt **durch** Aneinanderpressen der Umformkörper ausgeformt werden.

## Claims

1. Handle having protrusions (26, 28, 30), which are formed parallel to an axis (12) and at least partially form a cavity (42, 44, 46) about the axis (12), **characterized in that** the protrusions (26, 28, 30) are arranged in succession along the axis (12), wherein at least one protrusion (26, 28, 30) is formed in the opposite direction to an adjacent protrusion (26, 28, 30) radially with respect to the axis (12).

2. Handle according to Claim 1, **characterized in that** at least one protrusion (26, 28, 30) is provided with a cutout (48).

3. Handle according to one or both of the preceding claims, **characterized in that** the protrusions (26, 28, 30) are formed in at least two tiers.

4. Handle according to one or more of the preceding claims, **characterized in that** it is produced from a plurality of flat steel bars (80, 82) which can be fitted into one another.

5. Handle according to one or more of the preceding claims, **characterized in that** it is in the form of a cast part.

6. Handle according to one or more of the preceding claims, **characterized in that** it has side edge regions (18, 20) that are provided with a flange (50).

7. Handle according to one or more of the preceding claims, **characterized in that** the protrusions (26, 28, 30) enclose a cavity (42, 44, 46) by more than 180°.

8. Lifting spindle arrangement having a rotary body (54), **characterized in that** a handle (10) according to one or more of the preceding claims is provided on the rotary body (54), wherein the protrusions (26, 28, 30) of the handle (10) can be brought into engagement with the rotary body (54) in a rotatable and axially displaceable manner.

9. Lifting spindle arrangement according to Claim 8, **characterized in that** a projection (62) is provided on the rotary body (54) and the handle (10) can be brought into engagement with the projection (62) by radial alignment of the cutout (48) with the projection (62) and axial displacement along the axis (12).

10. Lifting spindle arrangement according to Claim 8 and/or Claim 9, **characterized in that** the projection (62) is formed by a clamping pin extending transversely to the axis (12).

11. Method of manufacturing a handle (10) according to one or more of Claims 1 to 3, **characterized by** the shaping of a flat steel bar (11, 80, 82) using a shaping arrangement having a first and a second shaping body, wherein the first and the second shaping bodies have formations which extend in opposite directions, wherein the formations have forms corresponding substantially to the protrusions (26, 28, 30) of the handle (10) and wherein the protrusions (26, 28, 30) of the handle (10) are formed in the flat steel bar (11, 80, 82) in a single shaping step by pressing together the shaping bodies.

## Revendications

1. Poignée comprenant des renflements (26, 28, 30) réalisés parallèlement à un axe (12), qui forment autour de l'axe (12) au moins en partie une cavité (42, 44, 46), **caractérisée en ce que** les renflements (26, 28, 30) sont disposés les uns derrière les autres le long de l'axe (12), au moins un renflement (26, 28, 30) étant façonné de manière opposée radialement par rapport à l'axe (12) par rapport à un renflement (26,28,30) adjacent.

2. Poignée selon la revendication 1, **caractérisée en ce qu'**au moins un renflement (26, 28, 30) est pourvu d'un évidement (48).

3. Poignée selon l'une quelconque ou plusieurs des revendications précédentes, **caractérisée en ce que** les renflements (26, 28, 30) sont réalisés au moins en deux étages.

4. Poignée selon l'une quelconque ou plusieurs des revendications précédentes, **caractérisée en ce qu'**elle est fabriquée à partir de plusieurs éléments en acier plats (80, 82) pouvant être assemblés les uns dans les autres.

5. Poignée selon l'une quelconque ou plusieurs des revendications précédentes, **caractérisée en ce qu'**elle est réalisée sous forme de pièce coulée.

6. Poignée selon l'une quelconque ou plusieurs des revendications précédentes, **caractérisée en ce qu'**elle présente des régions d'arête latérale (18, 20) pourvues d'un rabattage (50).

7. Poignée selon l'une quelconque ou plusieurs des revendications précédentes, **caractérisée en ce que** les renflements (26, 28, 30) enveloppent une cavité (42, 44, 46) sur plus de 180°.

8. Agencement de vis de levage comprenant un corps rotatif (54), **caractérisé en ce qu'**une poignée (10) selon l'une quelconque ou plusieurs des revendications précédentes est prévue sur le corps rotatif (54), les renflements (26, 28, 30) de la poignée (10) pouvant être amenés en prise de manière rotative et déplaçable axialement avec le corps rotatif (54).

9. Agencement de vis de levage selon la revendication 8, **caractérisé en ce qu'**une saillie (62) est prévue sur le corps rotatif (54), et la poignée (10) peut être amenée en prise avec la saillie (62) par orientation radiale de l'évidement (48) par rapport à la saillie (62) et déplacement axial le long de l'axe (12).

10. Agencement de vis de levage selon la revendication 8 et/ou 9, **caractérisé en ce que** la saillie (62) est réalisée par une goupille de serrage s'étendant transversalement à l'axe (12).

11. Procédé de fabrication d'une poignée (10) selon l'une quelconque ou plusieurs des revendications 1 à 3, **caractérisé par** le façonnage d'un élément en acier plat (11, 80, 82), avec un dispositif de façonnage présentant un premier et un deuxième corps de façonnage, le premier et le deuxième corps de façonnage présentant des formations qui s'étendent dans des directions opposées, les formations présentant des formes correspondant essentiellement aux renflements (26, 28, 30) de la poignée (10) et les renflements (26, 28, 30) de la poignée (10) étant formés dans l'élément en acier plat (11, 80, 82) en une étape unique de façonnage par pressage l'un contre l'autre des corps de façonnage.
